# EUROPEAN PATENT APPLICATION

(11) **EP 3 798 892 A1**
(43) Date of publication of application: **31.03.2021**
(21) Application number: 20197696.6
(22) Date of filing: 23.09.2020
(51) Int. Cl.: G06F 21/62, G06F 21/64

(54) **METHOD, APPARATUS, AND SYSTEM FOR PROVIDING A CONSENT MANAGEMENT SYSTEM ON A CRYTOGRAPHIC LEDGER**

(30) Priority: 26.09.2019 US 201916584305
(71) Applicant: HERE Global B.V., 5611 ZT Eindhoven (NL)
(72) Inventor: KONDRASHOV, Oleksandr, Chicago, IL Illinois 60606 (US); LANFRANCHI, Giovanni, Chicago, IL Illinois 60606 (US); MUDRYY, Ihor, Chicago, IL Illinois 60606 (US)
(74) Representative: Potter Clarkson

(57) **Abstract**

An approach is provided for a consent management using a cryptographic ledger (e.g., a blockchain). The approach, for example, involves providing a cryptographic ledger. The cryptographic ledger includes one or more data records that store metadata indicating a consent request from a data consumer to provide an access to data owned by a data subject, a consent response from the data subject to the consent request, or a combination thereof. The approach also comprises providing a neutral server to read the data from a database of a data provider on behalf of the data consumer based on the cryptographic ledger.

## Description

### BACKGROUND

Protecting user data privacy and managing access to user data have presented significant technical challenges to service providers. This is particularly true in environments in which data subjects (e.g., data owners), data providers (e.g., entities collecting and storing data from data owners), and data consumers (e.g., entities wanting access to the data owned by data subjects and stored by data providers) are part of the data processing chain but want to remain as anonymous as possible from each other while still benefitting from services, applications, products, etc. derived from access to such data.

### SOME EXAMPLE EMBODIMENTS

Therefore, there is a need for a consent management system for managing data access rights granted to data consumers that while enabling data subjects to maintain privacy over with whom they have consented to share data, and also enabling data consumers to maintain privacy over whose data they are accessing. For example, the various embodiments summarized in this section and described in more detail further use a cryptographic ledger (e.g., blockchain) in combination with a neutral proxy server to provide full visibility across the "trust chain" among the various actors (e.g., data subjects, data providers, and data consumers) involved in the consent management process while also storing data in a private and secure manner. This is because according to the various embodiments, the trust chain among the actors is based on a blockchain frame in which the actors can participate (e.g., as nodes). In addition, the various embodiments can use chaincode policies (e.g., smart contracts) to enable consistent and automated consent management behaviors between the actors. Moreover, some of the embodiments described herein provide for a "right to be forgotten" so that a user can revoke a previously granted consent and have that revocation seamlessly noticed in the blockchain-based ledger (e.g., noticed by using a chaincode).

According to one embodiment, a system for consent-management comprises a cryptographic ledger configured to store one or more encrypted data records that record metadata indicating a consent request from a data consumer to provide an access to data owned by a data subject, a consent response from the data subject to the consent request, or a combination thereof. The system further comprises a neutral server configured as a proxy to read the data from a database of a data provider on behalf of the data consumer based on the cryptographic ledger, e.g., while also protecting an identity of the data consumer from the data provider.

According to another embodiment, a computer-implemented method for consent management comprises providing a cryptographic ledger. The cryptographic ledger includes one or more data records that store metadata indicating a consent request from a data consumer to provide an access to data owned by a data subject, a consent response from the data subject to the consent request, or a combination thereof. The method also comprises providing a neutral server to read the data from a database of a data provider on behalf of the data consumer based on the cryptographic ledger.

According to another embodiment, an apparatus for consent management comprises at least one processor, and at least one memory including computer program code for one or more computer programs, the at least one memory and the computer program code configured to, with the at least one processor, cause, at least in part, the apparatus to provide a cryptographic ledger. The cryptographic ledger includes one or more data records that store metadata indicating a consent request from a data consumer to provide an access to data owned by a data subject, a consent response from the data subject to the consent request, or a combination thereof. The apparatus is also caused to provide a neutral server to read the data from a database of a data provider on behalf of the data consumer based on the cryptographic ledger.

According to another embodiment, a non-transitory computer-readable storage medium carries one or more sequences of one or more instructions which, when executed by one or more processors, cause, at least in part, an apparatus to provide a cryptographic ledger. The cryptographic ledger includes one or more data records that store metadata indicating a consent request from a data consumer to provide an access to data owned by a data subject, a consent response from the data subject to the consent request, or a combination thereof. The apparatus is also caused to provide a neutral server to read the data from a database of a data provider on behalf of the data consumer based on the cryptographic ledger.

According to another embodiment, an apparatus comprises means for providing a cryptographic ledger. The cryptographic ledger includes one or more data records that store metadata indicating a consent request from a data consumer to provide an access to data owned by a data subject, a consent response from the data subject to the consent request, or a combination thereof. The apparatus also comprises means for providing a neutral server to read the data from a database of a data provider on behalf of the data consumer based on the cryptographic ledger.

According to another embodiment, a computer-implemented method for consent management comprises retrieving metadata indicating a consent request from a cryptographic ledger, wherein the consent request is from a data consumer to access to data owned by a data subject, and wherein the data is stored in a database of data provider. The method also comprises providing output data to display the consent request in a user interface. The method further comprises receiving a consent response from the data subject via the user interface. The method further comprises instantiating a smart contract associated with the cryptographic ledger to record other metadata indicating the consent response in the cryptographic ledger. The neutral server, for instance, reads the data from the database of the data provider on behalf of the data consumer based on the cryptographic ledger.

According to another embodiment, an apparatus for consent management comprises at least one processor, and at least one memory including computer program code for one or more computer programs, the at least one memory and the computer program code configured to, with the at least one processor, cause, at least in part, the apparatus to retrieve metadata indicating a consent request from a cryptographic ledger, wherein the consent request is from a data consumer to access to data owned by a data subject, and wherein the data is stored in a database of data provider. The apparatus is also caused to provide output data to display the consent request in a user interface. The apparatus is further caused to receive a consent response from the data subject via the user interface. The apparatus is further caused to instantiate a smart contract associated with the cryptographic ledger to record other metadata indicating the consent response in the cryptographic ledger. The neutral server, for instance, reads the data from the database of the data provider on behalf of the data consumer based on the cryptographic ledger.

According to another embodiment, a non-transitory computer-readable storage medium for consent management carries one or more sequences of one or more instructions which, when executed by one or more processors, cause, at least in part, an apparatus to retrieve metadata indicating a consent request from a cryptographic ledger, wherein the consent request is from a data consumer to access to data owned by a data subject, and wherein the data is stored in a database of data provider. The apparatus is also caused to provide output data to display the consent request in a user interface. The apparatus is further caused to receive a consent response from the data subject via the user interface. The apparatus is further caused to instantiate a smart contract associated with the cryptographic ledger to record metadata indicating the consent response in the cryptographic ledger. The neutral server, for instance, reads the data from the database of the data provider on behalf of the data consumer based on the cryptographic ledger.

According to another embodiment, an apparatus for consent management comprises means for retrieving metadata indicating a consent request from a cryptographic ledger, wherein the consent request is from a data consumer to access to data owned by a data subject, and wherein the data is stored in a database of data provider. The apparatus also comprises means for providing output data to display the consent request in a user interface. The method further comprises receiving a consent response from the data subject via the user interface. The apparatus further comprises means for instantiating a smart contract associated with the cryptographic ledger to record other metadata indicating the consent response in the cryptographic ledger. The neutral server, for instance, reads the data from the database of the data provider on behalf of the data consumer based on the consent response recorded in the cryptographic ledger.

The following numbered paragraphs are disclosed:
1. A system for consent management comprising:
   a cryptographic ledger configured to store one or more encrypted data records, wherein the one or more encrypted data records store metadata indicating a consent request from a data consumer to provide an access to data owned by a data subject, a consent response from the data subject to the consent request, or a combination thereof; and
   a neutral server configured as a proxy to read the data from a database of a data provider on behalf of the data consumer based on the cryptographic ledger.
2. The system of paragraph 1, wherein the proxy protects an identity of the data consumer from the data provider.
3. The system of paragraph 1, wherein the cryptographic ledger is permissioned and distributed.
4. The system of paragraph 1, wherein the cryptographic ledger includes a smart contract layer to create or update the metadata indicating the consent request, the consent response, or a combination thereof.
5. The system of paragraph 1, wherein the cryptographic ledger is configured to provide a data isolation, a confidentiality, or a combination thereof between the data provider, the data subject, the data consumer, the neutral server, or a combination thereof.
6. The system of paragraph 1, wherein a user interface is presented on a device associated with the data subject based on the consent request, and wherein the user interface is configured to receive the consent response from the data subject for recording in the cryptographic ledger.
7. The system of paragraph 6, wherein the device instantiates a smart contract to record the metadata indicating the consent response in the cryptographic ledger.
8. The system of paragraph 7, wherein the smart contract is an executable computer code including one or more instructions that specify one or more rules, one or more conditions, or a combination thereof for interacting between the data provider, the data subject, the data consumer, the neutral server, or a combination thereof with respect to the consent request, the consent response, the access to the data, or a combination thereof.
9. The system of paragraph 1, wherein the cryptographic ledger is a source of truth of the consent request, the consent response, or a combination thereof among the data provider, the data subject, the data consumer, and the neutral server.
10. The system of paragraph 1, wherein the data provider, the data consumer, the neutral server, or a combination thereof operates a respective node of the cryptographic ledger.
11. A computer-implemented method for consent management comprising:
   providing a cryptographic ledger, wherein the cryptographic ledger includes one or more data records that store metadata indicating a consent request from a data consumer to provide an access to data owned by a data subject, a consent response from the data subject to the consent request, or a combination thereof; and
   providing a neutral server to read the data from a database of a data provider on behalf of the data consumer based on the cryptographic ledger.
12. The method of paragraph 11, further comprising:
   restricting the data provider from accessing the one or more data records of the cryptographic ledger.
13. The method of paragraph 11, wherein the data provider collects the data from the data subject and stores the data in the database.
14. The method of paragraph 11, wherein the database is an off-ledger database.
15. The method of paragraph 11, wherein the recording of the metadata indicating the consent request, the consent response, or a combination thereof in the cryptographic ledger is performed by initiating an instantiation of a smart contract on a respective node of the data provider, the data subject, the data consumer, the neutral server, or a combination thereof.
16. An apparatus for consent management comprising:
   at least one processor; and
   at least one memory including computer program code for one or more programs,
   the at least one memory and the computer program code configured to, with the at least one processor, cause the apparatus to perform at least the following,
      retrieve metadata indicating a consent request from a cryptographic ledger, wherein the consent request is from a data consumer to access to data owned by a data subject, and wherein the data is stored in a database of data provider;
      provide output data to display the consent request in a user interface;
      receive a consent response from the data subject via the user interface; and
      instantiate a smart contract associated with the cryptographic ledger to record other metadata indicating the consent response in the cryptographic ledger,
      wherein a neutral server reads the data from the database of the data provider on behalf of the data consumer based on the cryptographic ledger.
17. The apparatus of paragraph 16, wherein the apparatus is further caused to:
   initiate an authentication of the data subject with the data provider to request approval from the data subject to initiate the presenting of the user interface displaying the consent request.
18. The apparatus of paragraph 16, wherein the apparatus is further caused to:
   receive a result of a processing of the data by the data consumer; and
   presenting the result to the data subject.
19. The apparatus of paragraph 16, wherein the neutral server uses a reverse proxy to read the data on behalf of the data consumer.
20. The apparatus of paragraph 16, wherein the cryptographic ledger is permissioned and distributed between respective nodes operated by the data provider, the data consumer, the neutral server, or a combination thereof.

In addition, for various example embodiments of the invention, the following is applicable: a method comprising facilitating a processing of and/or processing (1) data and/or (2) information and/or (3) at least one signal, the (1) data and/or (2) information and/or (3) at least one signal based, at least in part, on (or derived at least in part from) any one or any combination of methods (or processes) disclosed in this application as relevant to any embodiment of the invention.

For various example embodiments of the invention, the following is also applicable: a method comprising facilitating access to at least one interface configured to allow access to at least one service, the at least one service configured to perform any one or any combination of network or service provider methods (or processes) disclosed in this application.

For various example embodiments of the invention, the following is also applicable: a method comprising facilitating creating and/or facilitating modifying (1) at least one device user interface element and/or (2) at least one device user interface functionality, the (1) at least one device user interface element and/or (2) at least one device user interface functionality based, at least in part, on data and/or information resulting from one or any combination of methods or processes disclosed in this application as relevant to any embodiment of the invention, and/or at least one signal resulting from one or any combination of methods (or processes) disclosed in this application as relevant to any embodiment of the invention.

For various example embodiments of the invention, the following is also applicable: a method comprising creating and/or modifying (1) at least one device user interface element and/or (2) at least one device user interface functionality, the (1) at least one device user interface element and/or (2) at least one device user interface functionality based at least in part on data and/or information resulting from one or any combination of methods (or processes) disclosed in this application as relevant to any embodiment of the invention, and/or at least one signal resulting from one or any combination of methods (or processes) disclosed in this application as relevant to any embodiment of the invention.

In various example embodiments, the methods (or processes) can be accomplished on the service provider side or on the mobile device side or in any shared way between service provider and mobile device with actions being performed on both sides.

For various example embodiments, the following is applicable: An apparatus comprising means for performing a method of the claims.

Still other aspects, features, and advantages of the invention are readily apparent from the following detailed description, simply by illustrating a number of particular embodiments and implementations, including the best mode contemplated for carrying out the invention. The invention is also capable of other and different embodiments, and its several details can be modified in various obvious respects, all without departing from the spirit and scope of the invention. Accordingly, the drawings and description are to be regarded as illustrative in nature, and not as restrictive.

### BRIEF DESCRIPTION OF THE DRAWINGS

The embodiments of the invention are illustrated by way of example, and not by way of limitation, in the figures of the accompanying drawings:
FIG. 1 is a diagram of a system capable of providing a consent management system on a cryptographic ledger, according to one embodiment;
FIG. 2 is a diagram of components of a consent management platform, according to one embodiment;
FIG. 3 is a flowchart of a process (including both off-chain and on-chain processes) for providing consent management on a cryptographic ledger, according to one embodiment;
FIG. 4 is a flowchart of a process for providing consent at a user device, according to one embodiment;
FIGs. 5A-5E are diagrams of user interfaces for an example consent management use case, according to one embodiment;
FIG. 6 is a flowchart summarizing a consent management process from the perspective of a consent management platform, according to one embodiment;
FIG. 7 is a diagram of hardware that can be used to implement an embodiment;
FIG. 8 is a diagram of a chip set that can be used to implement an embodiment; and
FIG. 9 is a diagram of a client terminal that can be used to implement an embodiment.

### DESCRIPTION OF SOME EMBODIMENTS

Examples of a method, apparatus, and computer program for providing a consent management system on a cryptographic ledger are disclosed. As used herein, the term cryptographic ledger is used synonymously and interchangeable with blockchain. Accordingly, embodiments and descriptions referencing a cryptographic ledger is also applicable to a blockchain and vice versa. In the following description, for the purposes of explanation, numerous specific details are set forth in order to provide a thorough understanding of the embodiments of the invention. It is apparent, however, to one skilled in the art that the embodiments of the invention may be practiced without these specific details or with an equivalent arrangement. In other instances, well-known structures and devices are shown in block diagram form in order to avoid unnecessarily obscuring the embodiments of the invention.

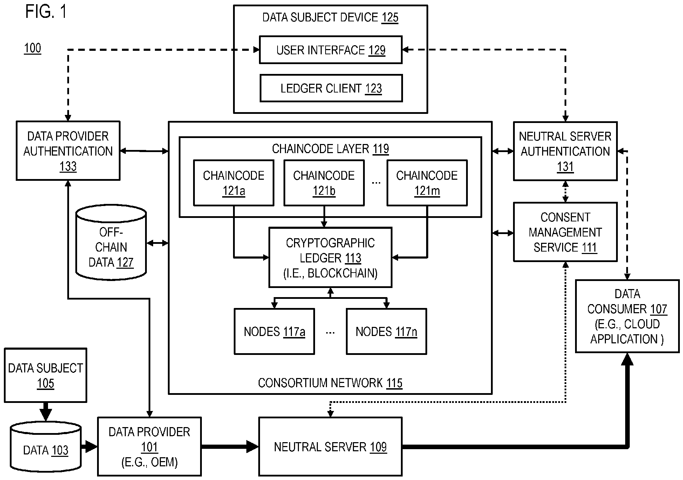

FIG. 1 is a diagram of a system capable of providing a consent management system on a cryptographic ledger, according to one embodiment. As shown in FIG. 1, one common scenario involves a data provider 101 collecting and storing data 103 from a data subject 105. For example, the data provider 101 can be any entity (e.g., an automobile original equipment manufacturer (OEM), service provider, etc.) that gathers and stores the data 103 from end user devices (e.g., vehicles, mobile phones, Internet of Things (IoT) devices, and/or any other devices owned or operated by one or more data subjects 105. In most cases, the data provider 101 (e.g., the OEM) acts as the data access point for access to the data 103 belonging to the data subjects and would like to remain in this role under any data management scheme or system.

By way of example, in an automotive use case, the data 103 collected from the data subjects 105 can include but is not limited to vehicle trajectory data (e.g., probe data), vehicle telemetry data, vehicle sensor data (e.g., collected from camera sensors, lidar, radar, etc.), and/or any other data collected, generated, and/or used by a vehicle and/or its operators or passengers. It is noted that although the various embodiments and examples described herein may be discussed with respect to vehicle data, it is contemplated that the embodiments of the approach described herein are applicable to any type of data 103 and/or data provider 101 including but not limited to data associated with mobile phones, IoT devices, etc. Generally, at least some (if not all of the data 103) can include privacy-sensitive or personal data that the data subjects 105 would want to protect from unauthorized exposure.

In one embodiment, the system 100 further includes a data consumer 107 which is an organization or other entity that is willing or otherwise seeking to access the personal data 103 of the data subjects 105 stored by the data provider 101. For example, the data consumer 107 can use a cloud or other application/service to access or request consent from the data subject 105 to access the data 103 to provide one or more web services or equivalent functions. However, the data consumer 107 may not want to reveal its identity to the data provider 101 to access the data 103 owned by the data subject 105, e.g., to protect their business processes and/or related intellectual property. Nonetheless, the data consumer 107 generally will need to get consent approval from the data subject 105 to access the data due to, for instance, applicable privacy policies (e.g., user specified policies or preferences), privacy regulations (e.g., the European Union's General Data Protection Regulation (GPDR) or equivalent regulations), industry standards (e.g., data access control and security standards for extended vehicle (ExVe) web services under ISO20078), and/or the like.

Traditional approaches generally require that the data consumer 107 have a relationship with the data provider 101 for consent approval from the data subject 105 to secure access the data 103. At the same time, the data subject 105 (e.g., who is the actual owner of the data 103 as opposed to the data provider 101) may also want to keep privacy and not to disclose with whom (e.g., the data consumer 107) the data subjects 105 share the data 103. In addition, the data subjects 105 generally should be in charge of the consent for access to their data 103.

In summary, the parties (e.g., the data provider 101, data subjects 105, and data consumers 107) generally do not trust each other with respect to data privacy, but a have a common goal - to enable sharing (and monetization) of the data 103 owned by the data subjects 105 in a secured way that complies with applicable policies, regulations, standards, etc. As a result, the potentially opposing objectives of the data provider 101, data subjects 105, and data consumers 107 provides significant technical challenges to facilitate access to the data 103 while also providing as much data isolation among the various parties as possible.

To address these technical challenges, the system 100 of FIG. 1 introduces a capability to provide a neutral server 109 that is a proxy (e.g., a reverse proxy) managed by an entity unaffiliated with any of the data provider 101, the data subjects 105, and data consumers 107 (i.e., neutral with respect to these three parties) that operates in combination with a cryptographic ledger 113 to provide a consent management system. In one embodiment, the neutral server 109 reads the data 103 owned by the data subjects 105 on behalf of the data consumer from the data provider 101's storage and passes it to the data consumer 107 (e.g., to the data consumer 107's cloud application) based on consent information managed by the consent management service 111 and stored in the cryptographic ledger 113. FIG. 1 illustrates this data flow by the bolded arrows connecting the data subject 105, data 103, data provider 101, neutral server 109, and data consumer 107. In this way, the neutral server 109 hides the identity of the data consumer 107 (e.g., from the data provider 101 and/or any other component of the system 100) on the network level. In other words, the system 100 advantageously provides for a trust chain for consent management to be built using the cryptographic ledger 113 to provide for full visibility of the trust chain among the participating nodes (e.g., the data provider 101, data subject 105, and data consumer 107). In addition, the system 100 provides for restricted access to the consent transactions recorded in the cryptographic ledger 113 to provide for secure and confidential interactions among subsets of the participants (e.g., the data provider 101, data subject 105, and data consumer 107).

In one embodiment, the neutral server 109 interacts with the consent management service 111 to determine the consent response (e.g., a consent approval or consent status) from the data subject 105 for access to the data 103 by the data consumer 107. More specifically, the consent management service 111 provides a cryptographic ledger 113 (also referred to as a blockchain 113) that keeps information (e.g., metadata) about consent requests (e.g., from the data consumers 107) and consent responses (e.g., from the data subjects 105). For example, the stored metadata, information, and/or other evidence can be associated with or otherwise indicate consent management related transactions (e.g., consent requests, consent responses, consent revocations, etc.). It is noted that in one embodiment, the metadata that provides evidence of the consent management transaction and not the actual data of the consent requests, consent responses, consent revocations, etc. are recorded in the cryptographic ledger 113 (e.g., a Hyperledger Fabric ledger or equivalent).

Based on whether the cryptographic ledger 113 indicates that the data subject 105 has granted approval or consent for the data consumer 107 to access all or a portion of the data subject 105's data, the neutral server 109 can read the corresponding data owned by the data subject 105 from the database 103 of the data provider 101 on the data consumer 107's behalf. The neutral server 109 can read the data as a proxy so that the identity of the data consumer 107 is protected or otherwise kept private from the data provider 101. In this way, the relationship between the data subject 105 and the data consumer 107 remains private to the two parties. In one embodiment, metadata (e.g., blockchain transaction data) representing a history of the data subject 105's data that has been read by a data consumer 107 can be recorded on the cryptographic ledger 107. Since the cryptographic ledger 113 is a distributed ledger, the system 100 can provide a service that enables the data subject 105 to generate a list of when and which of the data subject 105's data was consumed by the data consumer 107. In addition, the system 100 enables to the data subject 105 to purge the all data recorded in the cryptographic ledger 113 or in other components of the system 100 related to the data subject 105.

In one embodiment, the data subject 105 can be rewarded for sharing his or her data with the data consumer 107. As noted above, records indicating what data is read by a data consumer 107 can be recorded on the cryptographic ledger 113. The data subject 105 can then be rewarded based on these records in the cryptographic ledger 113. For example, the data subject can be incentivized to share data by awarding assets (e.g., cryptocurrency or other virtual assets) based giving consent (e.g., verified by looking for a consent transaction by the data subject 105 on the blockchain 113), sharing a certain amount of data (e.g., verified by looking for read transactions of the data subject 105's data by the data consumer 107 on the blockchain 113), sharing a certain number of times (e.g., verified by looking for read transactions of the data subject 105's data by the data consumer 107 on the blockchain 113). Incentives can also be based on other criteria such as but not limited to increasing the amount of the incentive when the number of sharing data subjects 105 is below a threshold, decreasing the amount of the incentive when the number of sharing data subjects 105 is above a threshold, etc. The incentive process, for instance, can be automated through the use of smart contracts (e.g., recorded on the blockchain as described further below) that specify criteria (e.g., amount of shared data, number of data access consents, etc.) for automatically initiating delivery of an asset to the data subject 105.

In one embodiment, the cryptographic ledger 113 is the single source of truth (e.g., with respect to consent to access the data 103) across all the parties of the system 100 (e.g., the data provider 101, data subject 105, data consumer 107, the neutral server 109, etc.). In one embodiment, the encrypted recorders of the cryptographic ledger 113 are permissioned using an access control language (ACL) or other protocol that enables rules that define which of the parties of the system 100 are permitted to create, read, update, delete, etc. records of the cryptographic ledger 113.

In general terms, a blockchain or cryptographic ledger 113 is an immutable cryptographically linked list of data blocks called a ledger and maintained within a distributed peer-to-peer framework such as a consortium network 115 with nodes 117a-117n (also collectively referred to as nodes 117). These nodes 117, for instance, each maintains an identical copy of the ledger 113 by appending transactions that have been validated by a consensus protocol, grouped into blocks. As noted above, the transactions are consent management-related transactions (e.g., consent requests, consent responses, consent revocations, etc.), and metadata indicating the transactions are stored in the cryptographic ledger 113. The blockchain or cryptographic ledger 113 also advantageously enables real-time synchronization between the participating nodes 117 in the network 115 so that the consent status or responses from the data subjects 105 are always in synchronization and up-to-date. Each block generally contains a cryptographic hash of previous block, a timestamp and transaction data (e.g., generally represented as a Merkle tree). The concept of a blockchain or cryptographic ledger 113 does not require a trusted authority or central server as all nodes 117 in the network 115 are equal and act as transaction initiators and validators at the same time, thereby providing full visibility of the cryptographic ledger 113 (e.g., the trust chain for consent transactions) across all nodes 117 (e.g., nodes associated with the data provider 101, data subject 105, and/or data consumer 107). All blocks that are added to a ledger 113 are unalterable and changing any of them retroactively would require alteration of all subsequent blocks which in turn requires consensus of network majority.

In a permissionless blockchain 113, virtually anyone can participate, and every participant is anonymous. In such a context, there can be no trust other than that the state of the blockchain 113, prior to a certain depth, is immutable. In order to mitigate this absence of trust, permissionless blockchains 113 typically employ a "mined" native cryptocurrency or transaction fees to provide economic incentive to offset the costs of participating in a form of byzantine fault tolerant (BFT) consensus based on "proof of work" (PoW) or "prove of stake" (PoS) algorithm.

Permissioned blockchains 113, on the other hand, operate a blockchain 113 amongst a set of known, identified and often vetted participants operating under a governance model that yields a certain degree of trust. Private and permission-based blockchains 113, for instance, are generally proposed for the business or enterprise sector. Permissioned blockchains 113 widely use an access control layer to govern who can access the distributed network 115. In one embodiment, new members are invited to join the consortium network 115 by a network owner (starter) or other members with the sufficient authorities applied by a set of rules or policies. By way of example, there are different types of access control mechanisms such as but not limited to: existing participants can invite newcomers; regulatory authority can issue a license or certificate for participation etc.

In one embodiment, the blockchain network (e.g., the consortium network 115) includes a smart contract or chaincode layer 119 comprising one or more smart contracts or chaincodes 121a-121m (also collectively referred to as chaincodes 121 or smart contracts 121). Each smart contract or chaincode 121 is automatically executable computer code running on top of a blockchain network (e.g., the consortium network 115), being encoded into the cryptographic ledger 113 itself. It is noted that the terms "smart contract" and "chaincode" are used interchangeably even though chaincode is the Hyperledger Fabric implementation specific term for smart contract. Each smart contract or chaincode 121, for instance, contains a set of rules and conditions under which the parties of the "smart" contract agree to interact with each other. For example, within a consent management context, a smart contract or chaincode 121 can initiate a recording of a consent request on the cryptographic ledger 113 after the nodes 117 verify that a payment has been made, or a chaincode 121 can record a consent response from a data subject 105 after the consent request is presented and the response has been received. In this way, the smart contract code or chaincode 121 facilitates, verifies and enforces negotiation of agreements or transactions between parties (e.g., the data provider 101, the data subject 105, the data consumer 107, the neutral server 109, etc.). In addition, the chaincode 121 enables consistent and automatic consent management behavior across the system 110, thereby advantageously avoiding any potential discriminatory consent-related behavior among the participants (e.g., favoring one data consumer 107 over another).

For example, considering a blockchain or cryptographic ledger 113 as the data, the smart contract or chaincode 121 is a logic which allows to the manipulation of virtual assets. As described above, the chaincode 121 is executed (e.g., by nodes 117 of the consortium network 115 to reach a consensus) when programmed conditions are met. The advantage of the smart contract or chaincode 121 is that it does not require third-parties being involved in the agreement based on a blockchain 113. All transactions made are validated by required members or nodes 117 using the instantiations of the chaincode 121 and stored in the cryptographic ledger 113 only when consensus is met. In one embodiment, a smart contract or chaincode 121 is a secure and, in most cases, public way of managing assets, agreements, registries, etc. including but not limited to those with consent management for accessing the data 103 owned by the data subjects 105. In one embodiment, blockchain network participants (e.g., nodes 117 operated by parties such as the data provider 101, the data consumer 107, the neutral server 109, etc.) can create, deploy and execute smart contracts. This enables the participants or nodes 117 to initiate new assets (e.g., access rights to the data 103, value or assets exchanged for those access rights, and/or any other assets associated with the embodiments of the consent management system described herein) and govern their states.

In one embodiment, consent management is the capability to manage data access rights granted or approved by the data subjects 105 to the data consumers 107, data providers 101, and/or other entities of the system 100 based specific data access control and security standards required by laws or regulations (e.g., GPDR), and/or the like). The embodiments of the system 100 described herein for consent management on a blockchain or cryptographic ledger 113 has characteristics such as but not limited to the any combination of the following:
- The system 100 has a modular, configurable, and scalable architecture (e.g., based on Hyperledger Fabric or equivalent) with separation on roles between nodes 117 in a blockchain network (e.g., a consortium network 115).
- Consensus and membership in the blockchain or cryptographic ledger 113 are fully configurable and pluggable.
- The system 100 provides a channel (e.g., Hyperledger Fabric channel) using a private blockchain overlay which allows for data isolation and confidentiality among different participants. For example, the channel is a private communication channel between any subgroup of the members (e.g., subgroup of the nodes 117) over which the members of the subgroup can conduct confidential and private transactions that are not accessible by other members of the consortium network 115.
- The system 100 provides a blockchain or cryptographic ledger 113 (e.g., a distributed ledger) to keep an irreversible and non-repudiable record of existing consents and their data usage (e.g., a single source of truth for data access consent responses provided by the data subjects 105 in response to consent requests from the data consumers 107).
- Smart contracts or chaincodes 121 in the ledger fabric are used to create, change and control data usage policy by the data subjects 105.
- Data accessing is executed off-chain in a trusted environment (e.g., the neutral server 109) and fully relies on consent records in cryptographic ledger 113.
- Individual data subjects 105 (e.g., the owner of the data 103 stored by the data provider 101) can control their data access and usage keeping their private information asymmetrically encrypted in the cryptographic ledger 113.
- The data subjects 105 (e.g., consent response records) and data consumers 107 (e.g., consent request records) have their own encrypted and uniquely identified records in the cryptographic ledger 113.
- Using ACL, an access to the records in the ledger is prohibited for the data provider 101, thereby advantageously enabling the data consumer 107 and the data subjects 105 to prevent the data provider 101 from accessing their respective records in the cryptographic ledger 113 (e.g., effectively shielding any relationship or transactions between the data subjects 105 and the data consumer 107 from the data provider 101 or even from each other).

In one embodiment, one or more parties of the system 100 (e.g., the data provider 101, the data consumer 107, the neutral server 109, etc.), except the data subjects 105, run respective nodes 117 of the distributed cryptographic ledger 113. As described above, these nodes 117 can execute smart contracts or chaincodes 121 to reach the consensus on recording a record in the cryptographic ledger 113.

In one embodiment, the system 100 provides a client library (e.g., a ledger client 123) that can be executed on a data subject device 125 to make the data subject 105 (e.g., a data subject device 125) to be part of the cryptographic ledger 113 and control data access directly by instantiating chaincodes 121 to update consent responses or approval stored, for instance, in the data subject records 105 of the cryptographic ledger 113. The ledger client 123, for instance, can be a lightweight node (e.g., a simple payment verification (SPV) node) of the consortium network 115. In this embodiment, there is no server that exposes an application programming interface (API) and conducts operations with the cryptographic ledger 113 on behalf of the data subjects 105. Accordingly, the embodiment makes the data subject 105 to be truly and directly in charge of the access to their data 103 by others such as but not limited to the data consumers 107.

By way of example, there are several benefits and advantages the using a blockchain or cryptographic ledger 113 for consent management according to the embodiments described herein. These benefits and advantages include but is not limited to the following:
- Transparency and improved traceability: The data subject 105 is in charge of the consent and data access control for his or her data 103. Any change to the consent or data transfer affecting the data subject 105's data 103 is stored as a block in the blockchain. The cryptographic ledger 113 provides immutable records to provide for audit (e.g., irreversible hash is stored in the chain, personal data is stored off-chain in an encrypted off-chain database 127). In other words, the cryptographic ledger 113 provides a complete view of the consent and data exchange history among the parties of the system 100.
- Reduction in duplication: In one embodiment, the cryptographic ledger 113 acts a single source of truth on the consent, data access, and data transfer shared across permissioned network participants (e.g., the participants of the consortium network 115 including but not limited to the data provider 101, the data subjects 105, the data consumer 107, the neutral server 109, etc.).
- Enhanced security: In one embodiment, the cryptographic ledger 113 and the associated consortium network 115 is permissioned. For example, every participant in the shared ledger network 115 is identified and authorized to execute permitted actions. Every organization in shared ledger network 115 manages authentication and authorization of their peers and/or the data subjects 105.
- Prevention of fraudulent actions: In one embodiment, smart contracts or chaincodes 121 (e.g., in the chaincode layer 119) can ensure that verifiable and signed business logic will be executed to validate transactions in the cryptographic ledger 113 in real-time. In addition, only an authenticated data subject 105 is authorized to influence the consent and data access of the system 100.
- Scalability: The system 100 provides a common approach to manage consent and data access across all the organizations participating in the shared ledger network (e.g., the consortium network 115). For example, additional members can be added by simply adding additional nodes 117 to the consortium network 115 for the new participant.
- Fair conditions: By using smart contracts or chaincodes 121, the data consumers 107 can have truly non-discriminatory access to the data 103 with a given consent because the data provided 101 would not have access to the identity of the data consumers 107 or know with whom the data subjects 105 are sharing their data 103.
- Peer-to-peer communication: In one embodiment, peer-to-peer data exchange among the participants of the system 100 is established via encrypted channels. For example, only permitted participants can setup these channels and invite others to join.
- Data Monetization: The capabilities of the various embodiments described herein (e.g., blockchain/cryptographic ledger 113, smart contracts/chaincodes 121, permissioned network, etc.) enable secured, transparent, scalable, and real-time business models for use of the data 103 such as but not limited to advertisement campaigns, data productization, and/or the like.

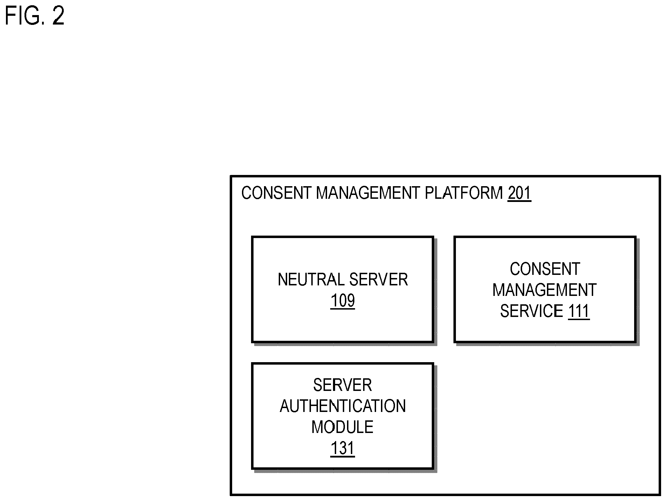

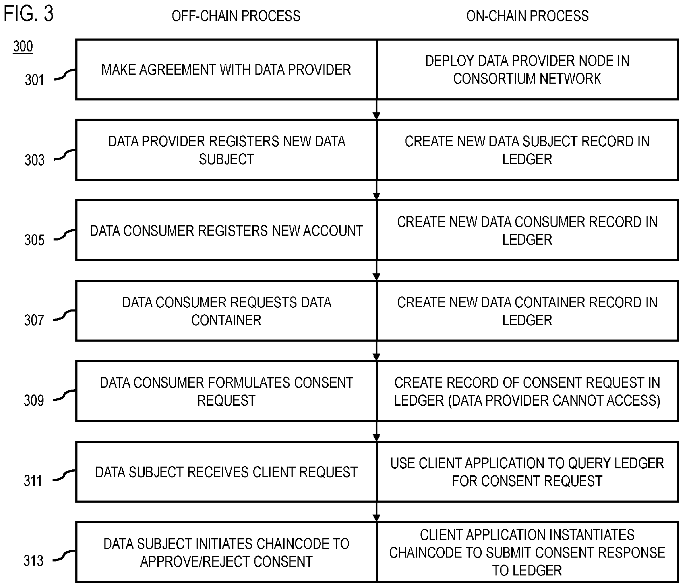

In one embodiment, as shown in FIG. 2, the components of the system 100 for providing a consent management system on a cryptographic ledger 113 can be included in a consent management platform 201. The consent management platform 201 can include, for instance, the neutral server 109, consent management service 111, and server authentication module 131. It is contemplated that the functions of these components may be combined or performed by other components of equivalent functionality. The above presented modules and components of the consent management platform 201 can be implemented in hardware, firmware, software, or a combination thereof. In another embodiment, the consent management platform 201 and/or one or more of components of the consent management platform 201 may be implemented as a cloud-based service, local service, native application, or combination thereof. The functions of the consent management platform 201 and its modules or components are discussed with respect to FIGs. 3-6 below.

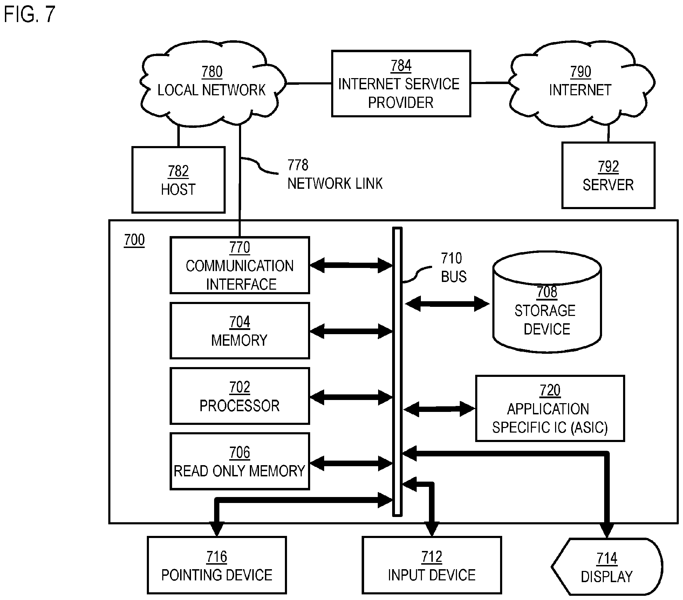

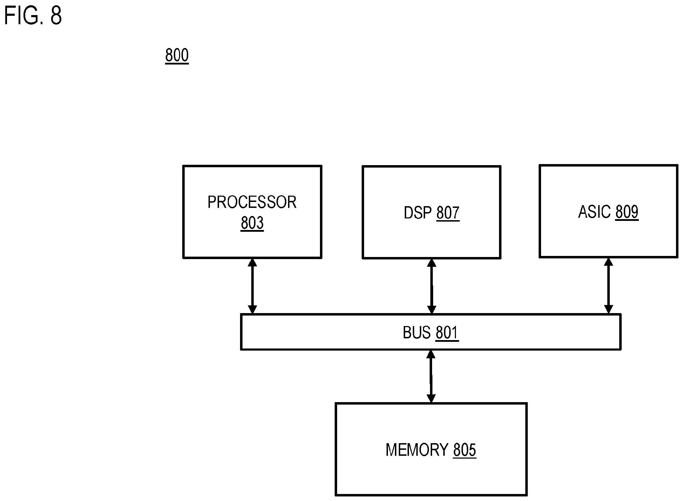

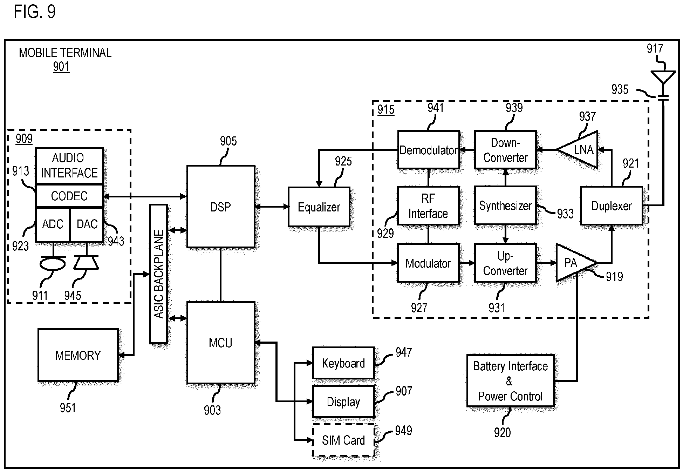

FIG. 3 is a flowchart of a process (including both off-chain and on-chain processes) for providing consent management on a cryptographic ledger, according to one embodiment. In various embodiments, the consent management platform 201, any of the nodes 117 of the consortium network 115, the ledger client of the data subject device 125, and/or any other component of the system 100 may perform one or more portions of the process 300 and may be implemented in, for instance, hardware as shown in FIG. 7, a chip set including a processor and a memory as shown in FIG. 8, and/or a client terminal as shown in FIG. 9. As such, the consent management platform 201, any of the nodes 117 of the consortium network 115, the ledger client of the data subject device 125, and/or any other component of the system 100 can provide means for accomplishing various parts of the process 300, as well as means for accomplishing embodiments of other processes described herein. Although the process 300 is illustrated and described as a sequence of steps, its contemplated that various embodiments of the process 300 may be performed in any order or combination and need not include all of the illustrated steps.

In addition, although the process 300 describes the off-chain (e.g., steps taken apart from the blockchain or cryptographic ledger 113) and corresponding on-chain (e.g., steps taken on the blockchain or cryptographic ledger 113) portions of each step, the process 300 may be performed using either the off-chain steps only, the on-chain steps only, or any combination of off-chain and on-chain steps. In one embodiment, the off-chain portions of the process 300 can be performed by the consent management platform 201 while the on-chain portions of the can be initiated by the consent management service 111 to be performed by the nodes 117 of the consortium network 115 and/or the ledger client of the data subject device 125.

In off-chain step 301, the consent management platform 201 or a provider of the consent management can negotiate with a data provider 101 to use the consent management service 111 for controlling security and data access to the data 103 collected from data subjects 105 and stored in the data 103 of the data provider 101. On reaching a successful agreement with the data provider 101, the consent management service 111 can deploy a new organization cluster with corresponding nodes 117 of the consortium network 115 (e.g., a Hyperledger fabric network or other permission blockchain infrastructure providing a module architecture with delineated roles for different nodes 117 of the network 115) on behalf of the new data provider 101 (on-chain step 301).

In off-chain step 303, the data provider 101 can register a new data subject 105 from which it has or plans to collect data 103. For example, a data provider 101 that is a vehicle OEM can register each vehicle or vehicle owner from which the data provider 101 collects or intends to collect data 103 as a data subject 105. In the on-chain portion of step 303, to register the data subject 105, the consent management service 111 can initiate the creation of a new data subject record in the cryptographic ledger 113 with a unique identifier (ID) (e.g., ID=SHA-512 or equivalent) for the data subject 105. In one embodiment, the creation of the new data subject record can be performed by the nodes 117 using a chaincode 121 that verifies the conditions for creating the record (e.g., transfer agreed upon amount of currency to the consent management platform 201) to reach a consensus for record creation.

In off-chain step 305, the data consumer 107 can register a new account with the consent management service 111 and gets credentials for running a node 117 or otherwise accessing the functions of the consent management platform 201. In on-chain step 305, the consent management service 111 can initiate the creation of a new data consumer record in the cryptographic ledger 113 with encrypted data (e.g., including both on-chain and off-chain encrypted and a unique ID (e.g., ID=SHA-512). In addition, if the data consumer 107 is authorized, the data consumer can be invited to deploy corresponding nodes 117 of the consortium network 115.

In off-chain step 307, the data consumer 107 can filter and select a listing of the data or data types that it needs or for which it is searching. The data consumer 107 can then request a data container for the needed data listing. For example, the data consumer 107 may be seeking mileage data from vehicles to provide mileage-based insurance premiums. Accordingly, the data consumer 107 can request a data container indicating the needed data (e.g., mileage data). In on-chain step 307, the consent management service 111 initiates the creation of a new data container record with a data structure indicating, for instance, the needed data in the cryptographic ledger 113. In one embodiment, the creation of the data container record can be performed using a corresponding chaincode 121 instantiated on the nodes 117 to reach consensus.

In off-chain step 309, the data consumer 107 then formulates a consent request to access the data 103 corresponding to the needed data selected in step 307 from one or more data subjects 105. The consent request can identify, for instance, the type of data that is needed from the data 103 owned by the data subjects 105, the purpose for the consent or intended use of the data, and/or any other information related to the consent request that the data consumer 107 wants to convey to the data subject 105. In on-chain step 309, the consent management service 111 initiates the creation of a dedicated record in the cryptographic ledger 113 storing the consent request. In one embodiment, access to the consent request record in the cryptographic ledger 113 can be restricted (e.g., using ACL) from the data provider 101 so that the data provider 101 cannot see the consent request in the cryptographic ledger 113. In other words, the identity of the data consumer 107, the data subject 105 to which the consent request is directed, and the consent purpose as recorded on the cryptographic ledger 113 are visible only to the data subject 105. In this way, the consent management platform 201 advantageously preserves the privacy of the relationship between the data subject 105 and the data consumer 107 from the data provider 101 while enabling the data provider 101 to remain as the data access point for the data 103 owned by the data subject 105.

In off-chain step 311, after the consent request or metadata (e.g., evidence of a transaction indicating the consent response) from the data consumer 117 is recorded on the cryptographic ledger 113, the data subject 105 can receive the consent request via a client application (e.g., a ledger client 123) installed on their edge devices (e.g., a data subject device 125 such as but not limited to a mobile device, smartphone, tablet, portable computer, etc.). In on-chain step 311, a blockchain client library can be integrated into a client application (e.g., a ledger client 123) that makes the data subject device 125 a part of the cryptographic ledger 113 without having to be a full node 117 of the consortium network 115. In one embodiment, the ledger client 123 can be as simple payment verification (SPV) client or equivalent. For example, an SPV enables the data subject device 125 to verify if particular transactions (e.g., transactions related to consent requests and/or consent responses) are included in a block of the cryptographic ledger 113 without having to download the entire block. In one embodiment, the ledger client 123 queries the cryptographic ledger 113 and retrieves the consent request records (e.g., metadata indicating the consent request transactions or evidence of the consent request transactions) associated with the data subject 105. The consent request, for instance, can then be presented in a user interface 129 of the data subject device 125 (e.g., via a client application executing on the data subject device 125).

In off-chain step 313, the data subject 105 can provide a consent response to the consent response for instantiating a corresponding chaincode 121 on the data subject device 125 to indicate a consent status (e.g., approve or reject the consent request). In on-chain step 313, the blockchain client library (e.g., in the ledger client 123) instantiates the chaincode 121 that submits a record to the cryptographic ledger 113 with metadata indicating the updated consent response. For example, to approve the consent request, the ledger client 123 instantiates the chaincode 121 that is programmed to create a consent response record in the cryptographic ledger 113 string metadata or other transaction evidence indicating a consent status that is an approval of the consent request. Similarly, to reject the consent request, the ledger client 123 instantiates the chaincode 121 programmed to create a consent response record in the cryptographic ledger 113 storing metadata indicating a consent status that is a rejection of the consent request. After providing an initial consent response, the data subject 105 can change the consent response by instantiating the corresponding chaincode 121 to either revoke or withdraw a previously granted access right or the change a previous rejection to a grant of the access rights.

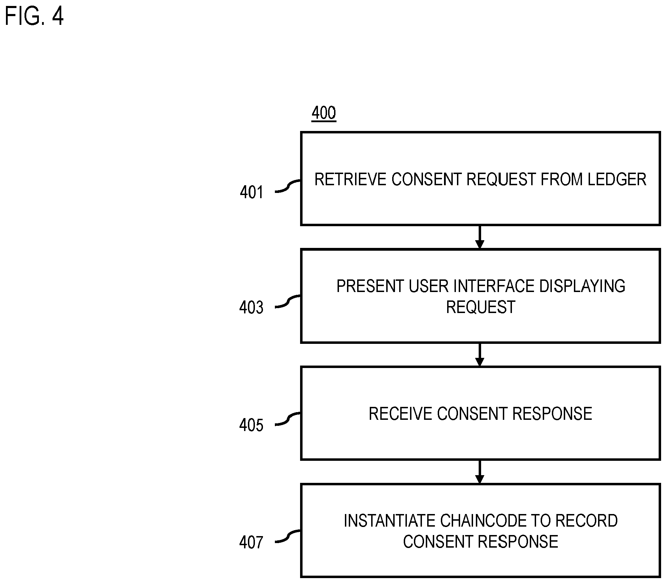

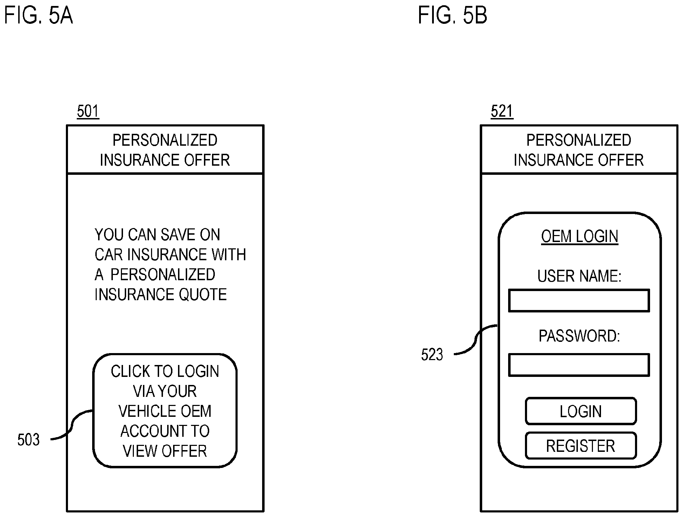

The steps 311 and 313 described above are further described respect to FIGs. 4 and 5A-5E below. FIG. 4 is a flowchart of a process for providing consent at a user device, according to one embodiment. In various embodiments, the ledger client of the data subject device 125 may perform one or more portions of the process 400 and may be implemented in, for instance, hardware as shown in FIG. 7, a chip set including a processor and a memory as shown in FIG. 8, and/or a client terminal as shown in FIG. 9. As such, the ledger client 123 of the data subject device 125 can provide means for accomplishing various parts of the process 400, as well as means for accomplishing embodiments of other processes described herein. Although the process 400 is illustrated and described as a sequence of steps, its contemplated that various embodiments of the process 400 may be performed in any order or combination and need not include all of the illustrated steps. The process 400 is described with respect to the example use of FIGs. 5A-5E.

In step 401, the ledger client 123 retrieves a metadata indicating a consent request from a cryptographic ledger 113. As described above, the consent request is from a data consumer 107 to access to data 103 owned by a data subject 105. The metadata indicating the consent request, for instance, is recorded into the cryptographic ledger 113 by the nodes 117 of the consortium network 115. The data 103 that is the subject of the consent request is gathered and stored in a database of data provider 101. In one embodiment, the consent request can be generated by the data consumer 107 based on a response from the data subject 105 to an advertisement, offer, solicitation, etc.

For example, in the example of FIG. 5A, a data subject 105 can be presented with a user interface 501 presenting an offer for a personalized vehicle insurance offer. By selecting the option 503 to view the offer, the data subject 105 (e.g., a driver seeking insurance) indicates to the data consumer 107 (e.g., the insurance company) potential interest in the offer. In response, the data consumer 107 generates a consent request to access the data 103 owned by the data subject 105 and available from the data provider 101. Metadata indicating this consent request is then recorded into the cryptographic ledger 113. In the context of a vehicle use case, the data 103 can be vehicle mileage data (e.g., the data 103 owned by the data subject 105) collected by a vehicle OEM (e.g., the data provider 101). This mileage data is desired by the insurance company (e.g., the data consumer 107) to provide a personalized insurance quote to the driver (e.g., the data subject 105).

In step 403, the data subject device 125 presents a user interface displaying the retrieved consent request. In one embodiment, the consent request record that was retrieved from the cryptographic ledger 113 and/or the corresponding encrypted off-chain database 127 can specify the consent request purpose, intended use, etc. In one embodiment, to view the offer, the data provider 101 (e.g., OEM) may request that the data subject 105 authenticate with the data provider 101 (e.g., via a data provider authentication 133 as shown in FIG. 1) as an added layer of security. An example of this authentication process is illustrated by adding a requirement that the data subject 105 login with the data provider 101 (e.g., OEM) as part of the option 503 to view the offer from the insurance company. In the example of FIG. 5B, the data subject device 125 displaying the offer user interface 521 can present a widget 523 (e.g., a web view) providing a login screen to the authenticate with the data provider 101. In other words, the data subject device 125 (e.g., via a ledger client 123 and/or user interface 129) optionally initiates an authentication of the data subject 105 with the data provider 101 to request approval from the data subject to initiate the presenting of the user interface displaying the consent request.

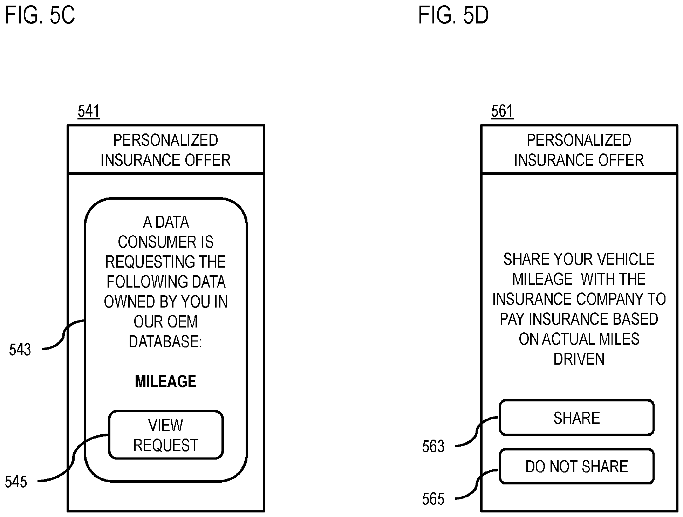

As shown in the user interface 541 of FIG. 5C, after authenticating with the data provider 101, the widget 543 is updated to present a request to the data subject 105 to confirm that the data subj ect 105 would like to view the consent request from the data provider 101. The widget 543 can display, for instance, the data type (e.g., mileage that is associated with the consent request). After selecting the option 545 to view the consent request, the data subject 105 is presented with the user interface 561 of FIG. 5D to view the actual offer including all related information including but not limited to the consent purpose (e.g., "Share your vehicle mileage with the insurance company to pay insurance based on actual miles driven.") and/or other consent request related information. The user interface 561 gives the option 563 to approve the consent request (e.g., via a "share" button) and the option 565 to reject the consent request (e.g., via a "do not share" button).

In step 405, the user device receives a consent response from the data subject via the user interface (e.g., based on the user selecting the "share" or "do not share" button in the user interface 561). In step 407, the user device instantiates a chaincode 121 associated with the cryptographic ledger 113 to record metadata indicating the consent response in the cryptographic ledger 113. For example, the chaincode 121 can include code that creates a consent response data record in the cryptographic ledger 113 that stores metadata indicating the consent status.

In one embodiment, a neutral server 109 then reads the data 103 from the database of the data provider 101 on behalf of the data consumer 107 based on the cryptographic ledger 113 (e.g., by determining the consent response as recorded in corresponding metadata stored on the cryptographic ledger 113). For example, before initiating the reading of the data 103, the neutral server 109 is permissioned to access the consent response record in the cryptographic ledger 113. The consent response records, for instance, stores metadata or other evidence of a transaction indicating consent from the data subject 105 to the consent request by the data consumer 107. The neutral server 109 then verifies that the data subject 105 has in fact approved the data access. As discussed previously, the cryptographic ledger 113 is treated as a single source of truth of consent data.

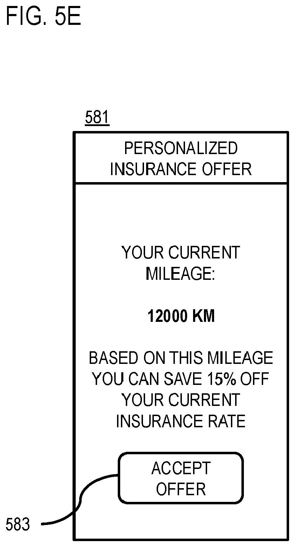

In one embodiment, the data consumer 107 can then use or process the data 103 provided by the neutral server 109, e.g., for use or processing according to the consent purpose stated in the consent request. The data subject device 125 then receives a result of a processing of the data 103 by the data consumer 107, and then presents the result to the data subject 105. For example, as shown in user interface 581 of FIG. 5E, the retrieved data 103 (e.g., vehicle mileage data) can be used to calculate a personalized insurance premium for the user. The user interface 581 displays the results (e.g., "Based on this mileage you can save 15% off your current insurance rate") and provides an option 583 to accept the offer.

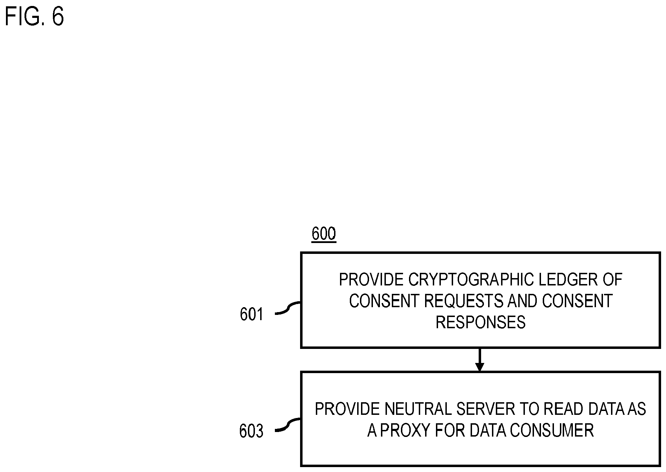

FIG. 6 is a flowchart summarizing a consent management process from the perspective of a consent management platform 201, according to one embodiment. More specifically, the process 600 describes how the consent management platform 201 provides the cryptographic ledger 113 and neutral server 109 as part of a system for consent management using a permissioned blockchain that delineates and isolates the roles and related data among the main parties involved in the embodiments of the system 100 described herein (e.g., the data provider 101, the data subject 105, the data consumer 107, and the neutral server 109). In various embodiments, the consent management platform 201 may perform one or more portions of the process 600 and may be implemented in, for instance, hardware as shown in FIG. 7, a chip set including a processor and a memory as shown in FIG. 8, and/or a client terminal as shown in FIG. 9. As such, the consent management platform 201 can provide means for accomplishing various parts of the process 600, as well as means for accomplishing embodiments of other processes described herein. Although the process 600 is illustrated and described as a sequence of steps, its contemplated that various embodiments of the process 600 may be performed in any order or combination and need not include all of the illustrated steps.

In step 601, the consent management platform 201 provides a cryptographic ledger 113 as a single source of truth for consent data (e.g., metadata or transaction data relating consent management) for the system 100. In one embodiment and as previously described, the cryptographic ledger 113 includes one or more data records that store metadata indicating a consent request from a data consumer 107 to provide an access to data 103 owned by a data subject 105. In addition, the cryptographic ledger 113 can include records that store metadata indicating a consent response from the data subject to the consent request alone or in combination with the consent request records. Because of the immutable blocks of the cryptographic ledger 113, a complete consent history with respect to data subjects 105 and data consumers 107 can be maintained over a period of time. This historical nature of the cryptographic ledger 113 enables its use as a potential data source for auditors (e.g., EU GPDR auditors) to verify compliance with privacy policies, laws/regulations, standards, etc.

In one embodiment, the cryptographic ledger 113 is permissioned and distributed between respective nodes 117 operated by the data provider 101, the data consumer 107, the neutral server 109, or a combination thereof. Permissioned, for instance, refers to a blockchain network in which a group of participants (e.g., nodes 117) are appointed to perform action on the blockchain or cryptographic ledger 113. In other words, a permissioned cryptographic ledger 113 uses ACL or equivalent to designate specific roles that can only be performed by designated participants or nodes. In yet another embodiment, the consortium network 115 is a private network in which participants are selected by invitation only (e.g., by the founder of the network 115 or other authorized member).

In one embodiment, the consent management platform 201 restricts the data provider 101 from accessing the one or more data records of the cryptographic ledger. As previously discussed, the data provider 101 collects the data 103 from the data subject and stores the data in the database. However, data subjects 105 who own the data 103 stored by the data provider 101 and data consumers 107 who seek to access to the data via the data provider 101 may not wish to share with whom and for what purpose they share the data 103. Accordingly, by restricting the data provider from accessing the consent records of the cryptographic ledger 113, the data provider 101 may not use the cryptographic ledger 113 to discover this information, thereby increasing data privacy and security.

In one embodiment, the database in which the data provider 101 stores the data 103 is an off-ledger (off-chain) database. Accordingly, in step 603, the consent management platform 201 provides a neutral server 109 to read the data from a database of a data provider on behalf of the data consumer based on the consent response. In other words, the neutral server 109 can act as a proxy to access the data 103 belonging to the data subject 105 without revealing to the data provider who the ultimate recipient of the data 103 is (e.g., the data consumer 107). More specifically, in one embodiment, the neutral server 109 can be a reverse proxy that sits in front of the data provider 101 to proxy requests from data consumers 107 to read the data 103 from the data provider 101 on their behalf. As a participant in the consortium network 115, the neutral server 109 is permissioned to access to the consent records of the cryptographic ledger 113 to verify consent approval before reading the data 103.

Returning to FIG. 1, the components of the system 100 have connectivity to each other over a communication network. These components include but are not limited to the data provider 101, data subject 105, data consumer 107, and neutral server 109. By way of example, the data consumers 107 may seek and obtain access to the data 103 owned by the data subjects 105 to provide a variety of services including but not limited to one or more of: mapping services, navigation services, travel planning services, notification services, social networking services, content (e.g., audio, video, images, etc.) provisioning services, application services, storage services, contextual information determination services, location based services, information based services (e.g., weather, news, etc.), etc.

In one embodiment, the components of the consent management platform 201 and/or system 100 may be a platform with multiple interconnected components. The consent management platform 201 may also include multiple servers, intelligent networking devices, computing devices, components and corresponding software for providing a consent management system on a cryptographic ledger 113 according to the embodiments described herein.

In one embodiment, the data subject device 125 may execute a software application to provide one or more functions of the consent management platform 201 or use the output of the consent management platform 201 to perform one or more functions. By way of example, the application may be any type of application that is executable on the data subject device 125 including but not limited to native applications, web-based applications, widgets, client libraries, and/or the like. In one embodiment, the application may act as a client for the consent management platform 201 to perform one or more functions associated with providing consent management on a cryptographic ledger 113 alone or in combination with the consent management platform 201.

By way of example, the data subject device 125 can be any type of embedded system, mobile terminal, fixed terminal, or portable terminal including a built-in navigation system, a personal navigation device, mobile handset, station, unit, device, multimedia computer, multimedia tablet, Internet node, communicator, desktop computer, laptop computer, notebook computer, netbook computer, tablet computer, personal communication system (PCS) device, personal digital assistants (PDAs), audio/video player, digital camera/camcorder, positioning device, fitness device, television receiver, radio broadcast receiver, electronic book device, game device, or any combination thereof, including the accessories and peripherals of these devices, or any combination thereof. It is also contemplated that the data subject device 125 can support any type of interface to the user (such as "wearable" circuitry, etc.).

In one embodiment, the communication network used by the components of system 100 includes one or more networks such as a data network, a wireless network, a telephony network, or any combination thereof. It is contemplated that the data network may be any local area network (LAN), metropolitan area network (MAN), wide area network (WAN), a public data network (e.g., the Internet), short range wireless network, or any other suitable packet-switched network, such as a commercially owned, proprietary packet-switched network, e.g., a proprietary cable or fiber-optic network, and the like, or any combination thereof. In addition, the wireless network may be, for example, a cellular network and may employ various technologies including enhanced data rates for global evolution (EDGE), general packet radio service (GPRS), global system for mobile communications (GSM), Internet protocol multimedia subsystem (IMS), universal mobile telecommunications system (UMTS), etc., as well as any other suitable wireless medium, e.g., worldwide interoperability for 5G New Radio (5G NR or simply 5G), microwave access (WiMAX), Long Term Evolution (LTE) networks, code division multiple access (CDMA), wideband code division multiple access (WCDMA), wireless fidelity (WiFi), wireless LAN (WLAN), Bluetooth®, Internet Protocol (IP) data casting, satellite, mobile ad-hoc network (MANET), any other generation of cellular technology, and the like, or any combination thereof.

By way of example, the components of the system 100 communicate using well known, new or still developing protocols. In this context, a protocol includes a set of rules defining how the network nodes within the communication network interact with each other based on information sent over the communication links. The protocols are effective at different layers of operation within each node, from generating and receiving physical signals of various types, to selecting a link for transferring those signals, to the format of information indicated by those signals, to identifying which software application executing on a computer system sends or receives the information. The conceptually different layers of protocols for exchanging information over a network are described in the Open Systems Interconnection (OSI) Reference Model.

Communications between the network nodes are typically effected by exchanging discrete packets of data. Each packet typically comprises (1) header information associated with a particular protocol, and (2) payload information that follows the header information and contains information that may be processed independently of that particular protocol. In some protocols, the packet includes (3) trailer information following the payload and indicating the end of the payload information. The header includes information such as the source of the packet, its destination, the length of the payload, and other properties used by the protocol. Often, the data in the payload for the particular protocol includes a header and payload for a different protocol associated with a different, higher layer of the OSI Reference Model. The header for a particular protocol typically indicates a type for the next protocol contained in its payload. The higher layer protocol is said to be encapsulated in the lower layer protocol. The headers included in a packet traversing multiple heterogeneous networks, such as the Internet, typically include a physical (layer 1) header, a data-link (layer 2) header, an internetwork (layer 3) header and a transport (layer 4) header, and various application (layer 5, layer 6 and layer 7) headers as defined by the OSI Reference Model.

The processes described herein for providing consent management on a cryptographic ledger 113 may be advantageously implemented via software, hardware (e.g., general processor, Digital Signal Processing (DSP) chip, an Application Specific Integrated Circuit (ASIC), Field Programmable Gate Arrays (FPGAs), etc.), firmware or a combination thereof. Such exemplary hardware for performing the described functions is detailed below.

FIG. 7 illustrates a computer system 700 upon which an embodiment of the invention may be implemented. Computer system 700 is programmed (e.g., via computer program code or instructions) to provide consent management on a cryptographic ledger 113 as described herein and includes a communication mechanism such as a bus 710 for passing information between other internal and external components of the computer system 700. Information (also called data) is represented as a physical expression of a measurable phenomenon, typically electric voltages, but including, in other embodiments, such phenomena as magnetic, electromagnetic, pressure, chemical, biological, molecular, atomic, sub-atomic and quantum interactions. For example, north and south magnetic fields, or a zero and non-zero electric voltage, represent two states (0, 1) of a binary digit (bit). Other phenomena can represent digits of a higher base. A superposition of multiple simultaneous quantum states before measurement represents a quantum bit (qubit). A sequence of one or more digits constitutes digital data that is used to represent a number or code for a character. In some embodiments, information called analog data is represented by a near continuum of measurable values within a particular range.

A bus 710 includes one or more parallel conductors of information so that information is transferred quickly among devices coupled to the bus 710. One or more processors 702 for processing information are coupled with the bus 710.

A processor 702 performs a set of operations on information as specified by computer program code related to providing consent management on a cryptographic ledger 113. The computer program code is a set of instructions or statements providing instructions for the operation of the processor and/or the computer system to perform specified functions. The code, for example, may be written in a computer programming language that is compiled into a native instruction set of the processor. The code may also be written directly using the native instruction set (e.g., machine language). The set of operations include bringing information in from the bus 710 and placing information on the bus 710. The set of operations also typically include comparing two or more units of information, shifting positions of units of information, and combining two or more units of information, such as by addition or multiplication or logical operations like OR, exclusive OR (XOR), and AND. Each operation of the set of operations that can be performed by the processor is represented to the processor by information called instructions, such as an operation code of one or more digits. A sequence of operations to be executed by the processor 702, such as a sequence of operation codes, constitute processor instructions, also called computer system instructions or, simply, computer instructions. Processors may be implemented as mechanical, electrical, magnetic, optical, chemical or quantum components, among others, alone or in combination.

Computer system 700 also includes a memory 704 coupled to bus 710. The memory 704, such as a random access memory (RAM) or other dynamic storage device, stores information including processor instructions for providing consent management on a cryptographic ledger 113. Dynamic memory allows information stored therein to be changed by the computer system 700. RAM allows a unit of information stored at a location called a memory address to be stored and retrieved independently of information at neighboring addresses. The memory 704 is also used by the processor 702 to store temporary values during execution of processor instructions. The computer system 700 also includes a read only memory (ROM) 706 or other static storage device coupled to the bus 710 for storing static information, including instructions, that is not changed by the computer system 700. Some memory is composed of volatile storage that loses the information stored thereon when power is lost. Also coupled to bus 710 is a non-volatile (persistent) storage device 708, such as a magnetic disk, optical disk or flash card, for storing information, including instructions, that persists even when the computer system 700 is turned off or otherwise loses power.

Information, including instructions for providing consent management on a cryptographic ledger 113, is provided to the bus 710 for use by the processor from an external input device 712, such as a keyboard containing alphanumeric keys operated by a human user, or a sensor. A sensor detects conditions in its vicinity and transforms those detections into physical expression compatible with the measurable phenomenon used to represent information in computer system 700. Other external devices coupled to bus 710, used primarily for interacting with humans, include a display device 714, such as a cathode ray tube (CRT) or a liquid crystal display (LCD), or plasma screen or printer for presenting text or images, and a pointing device 716, such as a mouse or a trackball or cursor direction keys, or motion sensor, for controlling a position of a small cursor image presented on the display 714 and issuing commands associated with graphical elements presented on the display 714. In some embodiments, for example, in embodiments in which the computer system 700 performs all functions automatically without human input, one or more of external input device 712, display device 714 and pointing device 716 is omitted.

In the illustrated embodiment, special purpose hardware, such as an application specific integrated circuit (ASIC) 720, is coupled to bus 710. The special purpose hardware is configured to perform operations not performed by processor 702 quickly enough for special purposes. Examples of application specific ICs include graphics accelerator cards for generating images for display 714, cryptographic boards for encrypting and decrypting messages sent over a network, speech recognition, and interfaces to special external devices, such as robotic arms and medical scanning equipment that repeatedly perform some complex sequence of operations that are more efficiently implemented in hardware.

Computer system 700 also includes one or more instances of a communications interface 770 coupled to bus 710. Communication interface 770 provides a one-way or two-way communication coupling to a variety of external devices that operate with their own processors, such as printers, scanners and external disks. In general the coupling is with a network link 778 that is connected to a local network 780 to which a variety of external devices with their own processors are connected. For example, communication interface 770 may be a parallel port or a serial port or a universal serial bus (USB) port on a personal computer. In some embodiments, communications interface 770 is an integrated services digital network (ISDN) card or a digital subscriber line (DSL) card or a telephone modem that provides an information communication connection to a corresponding type of telephone line. In some embodiments, a communication interface 770 is a cable modem that converts signals on bus 710 into signals for a communication connection over a coaxial cable or into optical signals for a communication connection over a fiber optic cable. As another example, communications interface 770 may be a local area network (LAN) card to provide a data communication connection to a compatible LAN, such as Ethernet. Wireless links may also be implemented. For wireless links, the communications interface 770 sends or receives or both sends and receives electrical, acoustic or electromagnetic signals, including infrared and optical signals, that carry information streams, such as digital data. For example, in wireless handheld devices, such as mobile telephones like cell phones, the communications interface 770 includes a radio band electromagnetic transmitter and receiver called a radio transceiver. In certain embodiments, the communications interface 770 enables connection to the communication network for providing consent management on a cryptographic ledger 113.

The term computer-readable medium is used herein to refer to any medium that participates in providing information to processor 702, including instructions for execution. Such a medium may take many forms, including, but not limited to, non-volatile media, volatile media and transmission media. Non-volatile media include, for example, optical or magnetic disks, such as storage device 708. Volatile media include, for example, dynamic memory 704. Transmission media include, for example, coaxial cables, copper wire, fiber optic cables, and carrier waves that travel through space without wires or cables, such as acoustic waves and electromagnetic waves, including radio, optical and infrared waves. Signals include man-made transient variations in amplitude, frequency, phase, polarization or other physical properties transmitted through the transmission media. Common forms of computer-readable media include, for example, a floppy disk, a flexible disk, hard disk, magnetic tape, any other magnetic medium, a CD-ROM, CDRW, DVD, any other optical medium, punch cards, paper tape, optical mark sheets, any other physical medium with patterns of holes or other optically recognizable indicia, a RAM, a PROM, an EPROM, a FLASH-EPROM, any other memory chip or cartridge, a carrier wave, or any other medium from which a computer can read.

FIG. 8 illustrates a chip set 800 upon which an embodiment of the invention may be implemented. Chip set 800 is programmed to provide consent management on a cryptographic ledger 113 as described herein and includes, for instance, the processor and memory components described with respect to FIG. 7 incorporated in one or more physical packages (e.g., chips). By way of example, a physical package includes an arrangement of one or more materials, components, and/or wires on a structural assembly (e.g., a baseboard) to provide one or more characteristics such as physical strength, conservation of size, and/or limitation of electrical interaction. It is contemplated that in certain embodiments the chip set can be implemented in a single chip.

In one embodiment, the chip set 800 includes a communication mechanism such as a bus 801 for passing information among the components of the chip set 800. A processor 803 has connectivity to the bus 801 to execute instructions and process information stored in, for example, a memory 805. The processor 803 may include one or more processing cores with each core configured to perform independently. A multi-core processor enables multiprocessing within a single physical package. Examples of a multi-core processor include two, four, eight, or greater numbers of processing cores. Alternatively or in addition, the processor 803 may include one or more microprocessors configured in tandem via the bus 801 to enable independent execution of instructions, pipelining, and multithreading. The processor 803 may also be accompanied with one or more specialized components to perform certain processing functions and tasks such as one or more digital signal processors (DSP) 807, or one or more application-specific integrated circuits (ASIC) 809. A DSP 807 typically is configured to process real-world signals (e.g., sound) in real time independently of the processor 803. Similarly, an ASIC 809 can be configured to performed specialized functions not easily performed by a general purposed processor. Other specialized components to aid in performing the inventive functions described herein include one or more field programmable gate arrays (FPGA) (not shown), one or more controllers (not shown), or one or more other special-purpose computer chips.

The processor 803 and accompanying components have connectivity to the memory 805 via the bus 801. The memory 805 includes both dynamic memory (e.g., RAM, magnetic disk, writable optical disk, etc.) and static memory (e.g., ROM, CD-ROM, etc.) for storing executable instructions that when executed perform the inventive steps described herein to provide consent management on a cryptographic ledger 113. The memory 805 also stores the data associated with or generated by the execution of the inventive steps.

FIG. 9 is a diagram of exemplary components of a mobile terminal 901 (e.g., a data subject device 125 or portion thereof) capable of operating in the system of FIG. 1, according to one embodiment. Generally, a radio receiver is often defined in terms of front-end and back-end characteristics. The front-end of the receiver encompasses all of the Radio Frequency (RF) circuitry whereas the back-end encompasses all of the base-band processing circuitry. Pertinent internal components of the telephone include a Main Control Unit (MCU) 903, a Digital Signal Processor (DSP) 905, and a receiver/transmitter unit including a microphone gain control unit and a speaker gain control unit. A main display unit 907 provides a display to the user in support of various applications and mobile station functions that offer automatic contact matching. An audio function circuitry 909 includes a microphone 911 and microphone amplifier that amplifies the speech signal output from the microphone 911. The amplified speech signal output from the microphone 911 is fed to a coder/decoder (CODEC) 913.

A radio section 915 amplifies power and converts frequency in order to communicate with a base station, which is included in a mobile communication system, via antenna 917. The power amplifier (PA) 919 and the transmitter/modulation circuitry are operationally responsive to the MCU 903, with an output from the PA 919 coupled to the duplexer 921 or circulator or antenna switch, as known in the art. The PA 919 also couples to a battery interface and power control unit 920.

In use, a user of mobile station 901 speaks into the microphone 911 and his or her voice along with any detected background noise is converted into an analog voltage. The analog voltage is then converted into a digital signal through the Analog to Digital Converter (ADC) 923. The control unit 903 routes the digital signal into the DSP 905 for processing therein, such as speech encoding, channel encoding, encrypting, and interleaving. In one embodiment, the processed voice signals are encoded, by units not separately shown, using a cellular transmission protocol such as global evolution (EDGE), general packet radio service (GPRS), global system for mobile communications (GSM), Internet protocol multimedia subsystem (IMS), universal mobile telecommunications system (UMTS), etc., as well as any other suitable wireless medium, e.g., microwave access (WiMAX), Long Term Evolution (LTE) networks, code division multiple access (CDMA), wireless fidelity (WiFi), satellite, and the like.

The encoded signals are then routed to an equalizer 925 for compensation of any frequency-dependent impairments that occur during transmission though the air such as phase and amplitude distortion. After equalizing the bit stream, the modulator 927 combines the signal with a RF signal generated in the RF interface 929. The modulator 927 generates a sine wave by way of frequency or phase modulation. In order to prepare the signal for transmission, an up-converter 931 combines the sine wave output from the modulator 927 with another sine wave generated by a synthesizer 933 to achieve the desired frequency of transmission. The signal is then sent through a PA 919 to increase the signal to an appropriate power level. In practical systems, the PA 919 acts as a variable gain amplifier whose gain is controlled by the DSP 905 from information received from a network base station. The signal is then filtered within the duplexer 921 and optionally sent to an antenna coupler 935 to match impedances to provide maximum power transfer. Finally, the signal is transmitted via antenna 917 to a local base station. An automatic gain control (AGC) can be supplied to control the gain of the final stages of the receiver. The signals may be forwarded from there to a remote telephone which may be another cellular telephone, other mobile phone or a land-line connected to a Public Switched Telephone Network (PSTN), or other telephony networks.

Voice signals transmitted to the mobile station 901 are received via antenna 917 and immediately amplified by a low noise amplifier (LNA) 937. A down-converter 939 lowers the carrier frequency while the demodulator 941 strips away the RF leaving only a digital bit stream. The signal then goes through the equalizer 925 and is processed by the DSP 905. A Digital to Analog Converter (DAC) 943 converts the signal and the resulting output is transmitted to the user through the speaker 945, all under control of a Main Control Unit (MCU) 903-which can be implemented as a Central Processing Unit (CPU) (not shown).

The MCU 903 receives various signals including input signals from the keyboard 947. The keyboard 947 and/or the MCU 903 in combination with other user input components (e.g., the microphone 911) comprise a user interface circuitry for managing user input. The MCU 903 runs a user interface software to facilitate user control of at least some functions of the mobile station 901 to provide consent management on a cryptographic ledger 113. The MCU 903 also delivers a display command and a switch command to the display 907 and to the speech output switching controller, respectively. Further, the MCU 903 exchanges information with the DSP 905 and can access an optionally incorporated SIM card 949 and a memory 951. In addition, the MCU 903 executes various control functions required of the station. The DSP 905 may, depending upon the implementation, perform any of a variety of conventional digital processing functions on the voice signals. Additionally, DSP 905 determines the background noise level of the local environment from the signals detected by microphone 911 and sets the gain of microphone 911 to a level selected to compensate for the natural tendency of the user of the mobile station 901.

The CODEC 913 includes the ADC 923 and DAC 943. The memory 951 stores various data including call incoming tone data and is capable of storing other data including music data received via, e.g., the global Internet. The software module could reside in RAM memory, flash memory, registers, or any other form of writable computer-readable storage medium known in the art including non-transitory computer-readable storage medium. For example, the memory device 951 may be, but not limited to, a single memory, CD, DVD, ROM, RAM, EEPROM, optical storage, or any other non-volatile or non-transitory storage medium capable of storing digital data.

An optionally incorporated SIM card 949 carries, for instance, important information, such as the cellular phone number, the carrier supplying service, subscription details, and security information. The SIM card 949 serves primarily to identify the mobile station 901 on a radio network. The card 949 also contains a memory for storing a personal telephone number registry, text messages, and user specific mobile station settings.

While the invention has been described in connection with a number of embodiments and implementations, the invention is not so limited but covers various obvious modifications and equivalent arrangements, which fall within the purview of the appended claims. Although features of the invention are expressed in certain combinations among the claims, it is contemplated that these features can be arranged in any combination and order.

## Claims

1. A system for consent management comprising:
a cryptographic ledger configured to store one or more encrypted data records, wherein the one or more encrypted data records store metadata indicating a consent request from a data consumer to provide an access to data owned by a data subject, a consent response from the data subject to the consent request, or a combination thereof; and
a neutral server configured as a proxy to read the data from a database of a data provider on behalf of the data consumer based on the cryptographic ledger.

2. The system of claim 1, wherein the proxy protects an identity of the data consumer from the data provider.

3. The system of claim 1, wherein the cryptographic ledger is permissioned and distributed.

4. The system of claim 1, wherein the cryptographic ledger includes a smart contract layer to create or update the metadata indicating the consent request, the consent response, or a combination thereof.

5. The system of claim 1, wherein the cryptographic ledger is configured to provide a data isolation, a confidentiality, or a combination thereof between the data provider, the data subject, the data consumer, the neutral server, or a combination thereof.

6. The system of claim 1, wherein a user interface is presented on a device associated with the data subject based on the consent request, and wherein the user interface is configured to receive the consent response from the data subject for recording in the cryptographic ledger.

7. The system of claim 6, wherein the device instantiates a smart contract to record the metadata indicating the consent response in the cryptographic ledger.

8. The system of claim 7, wherein the smart contract is an executable computer code including one or more instructions that specify one or more rules, one or more conditions, or a combination thereof for interacting between the data provider, the data subject, the data consumer, the neutral server, or a combination thereof with respect to the consent request, the consent response, the access to the data, or a combination thereof.

9. The system of claim 1, wherein the cryptographic ledger is a source of truth of the consent request, the consent response, or a combination thereof among the data provider, the data subject, the data consumer, and the neutral server.

10. The system of claim 1, wherein the data provider, the data consumer, the neutral server, or a combination thereof operates a respective node of the cryptographic ledger.

11. A computer-implemented method for consent management comprising:
providing a cryptographic ledger, wherein the cryptographic ledger includes one or more data records that store metadata indicating a consent request from a data consumer to provide an access to data owned by a data subject, a consent response from the data subject to the consent request, or a combination thereof; and
providing a neutral server to read the data from a database of a data provider on behalf of the data consumer based on the cryptographic ledger.

12. The method of claim 11, further comprising:
restricting the data provider from accessing the one or more data records of the cryptographic ledger.

13. The method of claim 11, wherein the data provider collects the data from the data subject and stores the data in the database.

14. The method of claim 11, wherein the database is an off-ledger database.

15. The method of claim 11, wherein the recording of the metadata indicating the consent request, the consent response, or a combination thereof in the cryptographic ledger is performed by initiating an instantiation of a smart contract on a respective node of the data provider, the data subject, the data consumer, the neutral server, or a combination thereof.
